# EUROPEAN PATENT SPECIFICATION

(11) **EP 3 536 425 B1**
(45) Date of publication and mention of the grant of the patent: **16.08.2023**
(21) Application number: 18160713.6
(22) Date of filing: 08.03.2018
(51) Int. Cl.: B23B 1/00, B23B 29/04, B23B 29/24, B23B 27/16

(54) **TURNING METHOD FOR A CNC-LATHE**
DREHVERFAHREN FÜR EINE CNC-DREHMASCHINE
PROCÉDÉ DE TOURNAGE POUR UN TOUR COMMANDÉE PAR ORDINATEUR

(43) Date of publication of application: 11.09.2019
(73) Proprietor: AB Sandvik Coromant, 811 81 Sandviken (SE)
(72) Inventor: Stjernstedt, Per-Anders, 804 27 Gävle (SE)
(74) Representative: Sandvik

(56) References cited:
- EP-A1- 1 415 742
- EP-A1- 3 153 260
- US-A1- 2006 111 019
- US-A1- 2011 142 562

## Description

### TECHNICAL FIELD OF THE INVENTION

The present invention belongs to the technical field of metal cutting. More specifically the present invention belongs to the field of methods for turning of a metal work piece, by use of computer or computerized numerical control, i.e. CNC, machines.

### BACKGROUND OF THE INVENTION AND PRIOR ART

In turning of metal work pieces using a CNC-lathe, it is common to use a plurality of cutting tools in order to machine a component having a predefined shape. The predefined shape of the component may vary considerably, and may include different features such as a slot or a groove.

In machining of components, it is a desire to reduce the machining time. One way to reduce the machining time is to reduce the time for tool change.

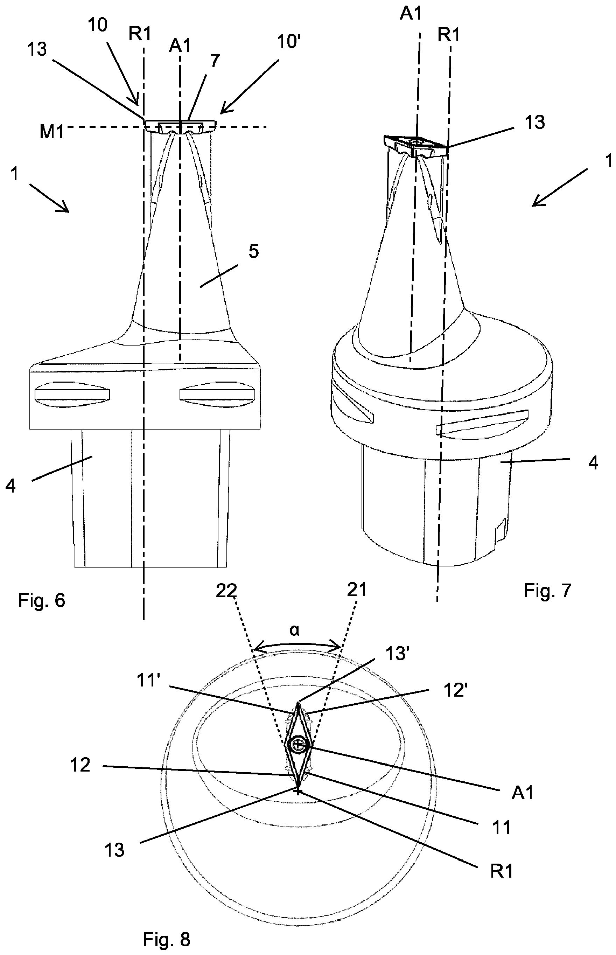

EP1158378B1 claims to provide a machine tool capable of machining in a plurality of machining modes with a single tool, wherein the loss of machining time due to tool change can be decreased and the number of tools to be prepared can be decreased. A tool is provided comprising a cutting insert, comprising two opposite nose portions of around 55° nose angle, mounted in a tool body, such that one nose portion is a free end and thereby in an active or usable position. A slot machining (tool positions 25F, 25G in Fig. 7) is shown. A so called B-axis can be set to a number of angles.

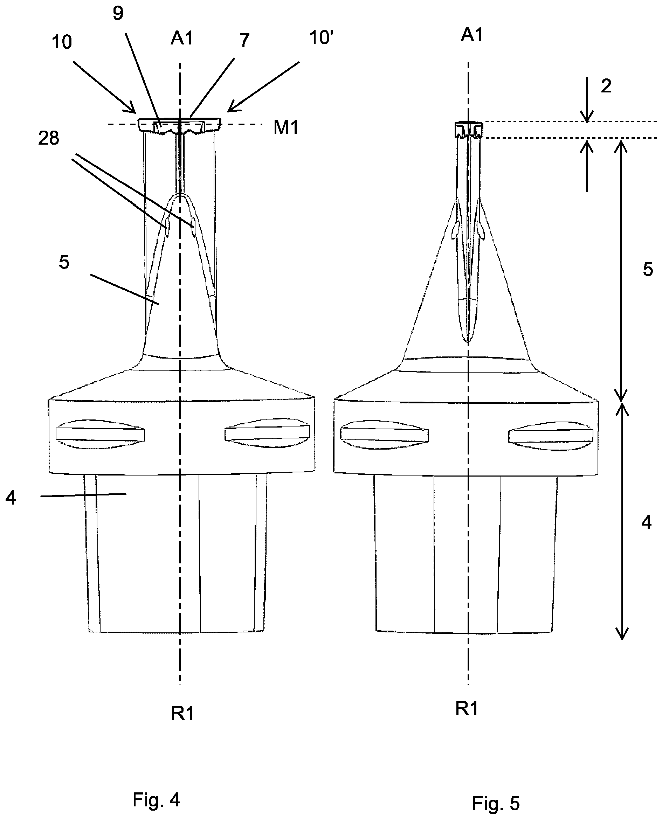

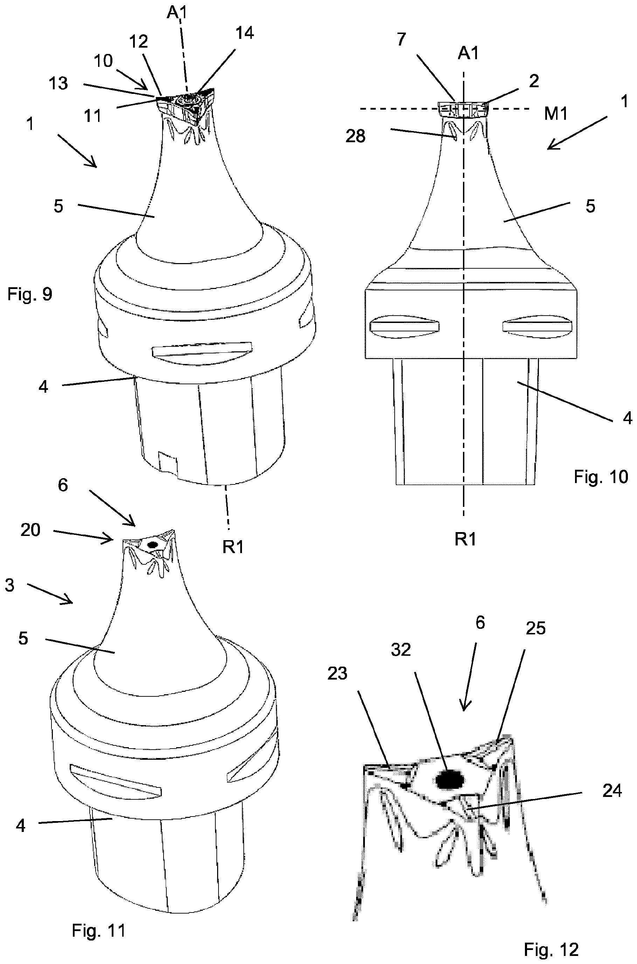

US 2006/0111019 A1 describes another tool already known. This is movable in such a way that it enables turning methods in the form of: cutting around profiles of the workpiece (as is shown in Fig. 5); and cutting on opposite sides thereof (as is shown in Fig. 9), using the same cutting tool and insert.

US 2006/111019 A discloses a turning method for a computerized numerical control lathe comprising the steps of: - providing a cutting tool comprising a coupling portion, an intermediate portion and a cutting portion, the intermediate portion extending between the coupling portion and the cutting portion, a longitudinal center axis of the coupling portion defining a tool rotational axis, the intermediate portion extending along a longitudinal center axis thereof, the cutting portion comprising a top surface, the top surface facing away from the coupling portion, the cutting portion comprising a first nose portion, the first nose portion comprising a first cutting edge, a second cutting edge, and a convex nose cutting edge connecting the first and second cutting edges; - providing a metal work piece; - rotating the metal work piece around a work piece rotational axis; - setting the tool rotational axis perpendicular to or substantially perpendicular to the work piece rotational axis; - making a first pass such that the first cutting edge is active and such that the second cutting edge is inactive, - making a second pass such that the first cutting edge is inactive and such that the second cutting edge is active, and wherein the method comprises the step of rotating the turning tool around the tool rotational axis during the first pass, during the second pass and after the first pass but prior to the second pass.

A further tool of similar type is described in US 2011/0142562 A1.

The inventor has found that the above described methods and tools can be further improved.

### SUMMARY OF THE INVENTION

The inventor has found that there is a need for an improved method. For example, when machining a slot using the method and tool described in EP1158378B1, the degree of B-angle adjustment possible is limited based on geometrical factors, especially the depth and width of the slot. For a relatively deep and narrow slot, there is an increased risk of interference between the tool body and the work piece. A further need for improvement which the inventor has found relates to the risk of vibrations, especially if cutting tools having a great overhang is used, such as in deep slot turning. A still further need for improvement relates to reducing the down-time for a CNC-machine.

An object of the present invention is to provide an improved turning method. This is achieved by a turning method as per claim 1.

By such a turning method, a predefined feature or a sub-portion of a predefined feature can be machined in a shorter time. For example, compared to conventional longitudinal turning using multiple passes where all passes are in the same direction, the present method is faster because there may be less movement from an end position of a first pass to a start position for a subsequent pass.

Especially, a predefined feature or a sub-portion of a predefined feature comprising a slot or a depression or a pocket or a groove can be machined in a shorter time, because only one cutting portion is necessary. The rotation of the cutting tool can be selected to provide sufficient clearance.

Further, by the rotation of the cutting tool, an entering angle can be selected freely, compared to conventional turning where the entering angle is a result of feed direction and tool design. Thus, the tool life and/or chip control can be improved.

By such a method, where the top surface of the cutting portion is facing away from the coupling portion and the tool rotational axis is perpendicular to or substantially perpendicular to the work piece rotational axis, the tangential cutting force is directed towards the machine spindle to which the coupling portion is connected. Thereby, the risk of vibration or deflection is reduced. Thereby, a deeper pocket can be machined.

By such a method, a single cutting tool can be used for machining numerous types of features, thereby reducing the need for tool inventory. By such a method, the tool life of the cutting portion may be increased because the insert wear may be more evenly distributed along both the first and second cutting edges.

The turning method is for use by means of a computerized numerical control (CNC) lathe. More specifically, the turning method is a machining sequence where an electronic control system controls movements, including rotations, of a cutting tool and a metal work piece in order to cut a predefined feature into a predefined location of the metal work piece.

Said predefined feature preferably comprises a pocket or a groove. Said predefined feature preferably opens into an outer peripheral surface of the metal work piece.

A cutting tool is provided, suitable for turning of metal work pieces. In other words, the cutting tool is a turning tool which can be used for cutting a rotating metal work piece. The cutting tool comprising a coupling portion connected directly, or by one or more tool devices, to a rotatable machine interface, e.g. a machine spindle, of the CNC-lathe. The CNC-lathe is suitable for turning, and may be in the form of e.g. a turning lathe, a multi task machine, a turn-mill machine, or a sliding head machine.

The coupling portion is preferably conical or substantially conical, such as preferably a in the form of a polygonal hollow taper interface with a flange contact surface, such in accordance to ISO 26623-1 :2014, or a hollow taper with a flange contact surface such in accordance to DIN 69893, ISO 12164-1 or ISO 12164-1F.

A longitudinal center axis of the coupling portion defines a tool rotational axis. In other words, when the coupling portion is mounted in the machine interface, e.g. the machine spindle, the cutting tool is rotatable around the tool rotational axis. In other words, the cutting tool is arranged to be rotatable around the tool rotational axis.

The tool rotational axis is a longitudinal center axis of the coupling portion. The cutting tool is arranged to be rotatable around a tool rotational axis thereof.

The coupling portion is preferably arranged symmetrically or substantially symmetrically around the tool rotational axis.

The coupling portion is preferably permanently connected to the intermediate portion, thereby forming a tool body.

The coupling portion and the intermediate portion are preferably made from steel.

The intermediate portion extends between and connects the coupling portion and the cutting portion.

The intermediate portion extends along a longitudinal center axis thereof. The intermediate portion is preferably arranged symmetrically or substantially symmetrically in relation to the longitudinal center axis thereof.

In cross sections perpendicular to the rotational axis, the intermediate portion preferably is greater in size, i.e. larger area, at a rear end thereof, i.e. at the intersection between the coupling portion and the intermediate portion, than at a front end thereof, i.e. at the intersection between the intermediate portion and the cutting portion.

The longitudinal center axis is preferably parallel to or co-linear, i.e. co-axial, with the tool rotational axis. The longitudinal center axis being parallel to the tool rotational axis means that the longitudinal center axis is spaced apart from the tool rotational axis.

The cutting tool comprises a cutting portion. The cutting portion defines a front end of the cutting tool. The coupling portion defines a rear end of the cutting tool. The cutting is preferably in the form of a cutting insert made from a hard and wear resistant material such as e.g. cemented carbide, cermet, cubic boron nitride (CBN) or ceramic. The cutting insert is preferably detachably mounted in an insert seat formed in a front end of the intermediate portion.

Alternatively, the cutting portion, the coupling portion and the intermediate portion is a singular body.

The cutting portion comprising a top surface comprising a rake face. The top surface is facing away from the coupling portion.

The top surface is perpendicular to or substantially perpendicular, i.e. within 10°, to the tool rotational axis.

The top surface preferably comprises chip breaking means, preferably in the form of one or more protrusions.

The cutting portion comprises a first nose portion. A nose portion can alternatively be designated as a corner portion.

The first nose portion comprises a first cutting edge, a second cutting edge, and a convex nose cutting edge connecting the first and second cutting edges.

The nose cutting edge is in top view preferably convexly curved, such as a circular arc having a radius of curvature of 0.15 - 1.3 mm, even more preferably 0.3 - 0.9 mm. Alternatively, the nose cutting edge may in top view have a convex shape, which convex shape deviates from a perfect circular arc, such as a shape which comprises two or more circular arcs having different radii of curvature. For example, the nose cutting edge may be a so-called wiper nose cutting edge.

Preferably, the nose cutting edge is the most distal portion of the cutting portion in relation to the longitudinal center axis of the intermediate portion.

The first and second cutting edges are each in a top view preferably straight or substantially straight. Preferably, in a top view a bisector formed mid-way between the first and second cutting edges intersects the longitudinal center axis of the intermediate portion.

The first and second cutting edges in a top view forms a nose angle which preferably is less than 90°, preferably 15° - 85°, even more preferably 20° - 40°.

The first nose portion form a free end of the cutting tool. Formulated differently, the first nose portion comprises a radially outer end portions of the front end of the cutting tool.

The first nose portion thus form a radially distal portion of the front end of the cutting tool, where said radial distance is in relation to the longitudinal center axis of the intermediate portion.

The cutting tool is preferably elongated in the direction of the longitudinal center axis of the intermediate portion, such that a distance from the top surface to the clamping portion is greater than a maximum diameter of the cutting tool measured in a plane perpendicular to the longitudinal center axis of the intermediate portion.

Preferably, in a top view the cutting portion is inside a circle having a diameter of 50 mm, more preferably inside a circle having a diameter of 35 mm.

Preferably, the cutting tool has a length measured along or parallel to the tool rotational axis which is 80 - 400 mm, more preferably 90 - 250 mm. Preferably, the cutting tool has a maximum diameter, measured perpendicular to the tool rotational axis, which is less than the said length of the cutting tool, preferably 0.2 - 0.8 times said length.

Preferably, the length of the coupling portion measured along or parallel to the tool rotational axis is less than the length of the intermediate portion.

Preferably, the length of the cutting portion measured along or parallel to the tool rotational axis is less than the length of the intermediate portion, more preferably less than 15 % of the length of the intermediate portion. A metal work piece is provided. The metal work piece may be made from e.g. steel, stainless steel, a Nickel-based super alloy or Aluminum.

The metal work piece is preferably rotationally symmetrical or substantially rotationally symmetrical around a rotational axis thereof. For example, the metal work piece may be cylindrical or substantially cylindrical.

The metal work piece comprises a peripheral surface. If the metal work piece is cylindrical, the peripheral surface comprises a lateral area or a side area (lateral area 2πrh) and top and bottom base areas (each area, also called base areas, is πr²), where r is the radius of the cylinder and h is the height of the cylinder (along the work piece rotational axis).

Even if the metal work piece is not in the form of a cylinder, we can still define a lateral surface, i.e. a surface facing away from the work piece rotational axis, and base surfaces, i.e. surfaces facing in a direction parallel to the work piece rotational axis.

The method comprises the step of rotating the metal work piece around a work piece rotational axis thereof. The metal work piece is clamped by clamping means at a clamping end thereof and the rotation is achieved by means of a motor. The CNC-lathe comprises said motor. The metal work piece rotates such that the speed of a peripheral surface of the metal work piece, is preferably 40 - 1000 m/min.

The method comprises the step of setting the tool rotational axis perpendicular to or substantially, i.e. less than 15°, perpendicular to the work piece rotational axis. The tool rotational axis and the work piece rotational axis are spaced apart.

The method comprises the step of making a first pass, by moving the cutting tool and the tool rotational axis relative to the metal work piece, such that the first cutting edge is active and is a leading edge or a main cutting edge, and such that the second cutting edge is inactive and is a trailing edge or a secondary cutting edge. The nose cutting edge is a surface generating cutting edge. The first pass creates or forms or results in a machined surface of the metal work piece.

Said first pass may be linear, i.e. along a straight line. Alternatively, said first pass may be curved or non-linear. In either case, said first pass comprises a component which preferably is an axial or longitudinal component, i.e. along the work piece rotational axis, such as longitudinal turning, or alternatively comprises a radial component, which is towards or away from the work piece rotational axis, such as facing or out-facing.

The velocity of said movement combined with the rotational speed of the metal work piece result in a feed rate for the first cutting edge, which feed rate is preferably 0.05 - 1.5 mm/revolution.

The method comprises the step of making a second pass, by moving the cutting tool and the tool rotational axis relative to the metal work piece, such that the first cutting edge is inactive and is a trailing edge or a secondary cutting edge, and such that the second cutting edge is active and is a leading edge or a main cutting edge. The nose cutting edge is a surface generating cutting edge. The second pass creates a machined surface.

Said second pass may be linear, i.e. along a straight line. Alternatively, said second pass may be curved or non-linear. In either case, said second pass comprises a component which preferably is an axial or longitudinal component, i.e. along the work piece rotational axis, such as longitudinal turning, or alternatively comprises a radial component, which is towards or away from the work piece rotational axis, such as facing or out-facing.

A start position and an end position for the first pass are spaced apart.

A start position and an end position for the second pass are spaced apart.

The velocity of said movement combined with the rotational speed of the metal work piece result in a feed rate for the second cutting edge, which feed rate is preferably 0.05 - 1.5 mm/revolution.

The second pass is longitudinally or radially opposite or substantially opposite to the first direction. For example, if the first pass or a component thereof is towards a clamping end of the metal work piece, the second pass or a component thereof is away from said clamping end of the metal work piece. In other words, the second pass is longitudinally opposite the first pass.

Another example is if the first pass or a component thereof is towards the work piece rotational axis. In such case, the second pass or a component thereof is away from the work piece rotational axis. In other words, the second pass is radially opposite the first pass.

Formulated differently, either the first and second passes are both related to cutting of the lateral surface of the metal work piece, or the first and second passes are both related to cutting of one base surfaces of the metal work piece. In the first example, the first and second passes can be longitudinal turning or profile turning operations, in opposite directions longitudinally.

In the second example, the first and second passes can be facing operations, such as in-facing and out-facing operations, respectively.

In other words, the expression "the second pass is longitudinally or radially opposite or substantially opposite to the first pass" can be understood as if the first pass comprises a longitudinal component, the second pass comprises an opposite longitudinal component, and if the first pass comprises a radial component, the second pass comprises an opposite radial component.

A second pass which is linear and radial, i.e. perpendicular to the work piece rotational axis is not considered opposite to a first pass which is linear and parallel to the work piece rotational axis, because the second pass has no component which is along the work piece rotational axis.

Preferably, a predefined feature or a sub-portion of a predefined feature formed by the first and second passes is formed completely or to a major extent in a lateral surface of the metal work piece, and in that the opposite components of the first and second direction, respectively are longitudinal.

Alternatively, a predefined feature or a sub-portion of a predefined feature formed by the first and second passes is formed completely or to a major extent in a base surface of the metal work piece, and in that the opposite components of the first and second pass, respectively are radial.

The moving of the tool rotational axis during the first and second pass, respectively, is preferably a parallel movement. In other words, the initial, intermediate and final orientations or positions of the tool rotational axis are parallel.

The first and second passes are automated cutting cycles.

The method comprises the step of rotating the turning tool around the tool rotational axis during the first pass and/or during the second pass and/or after the first pass but prior to the second pass. In other words, the method comprises a rotational movement of the turning tool around the tool rotational axis.

Said rotating of the turning tool around the tool rotational axis is, if during the first and/or second pass, is preferably synchronized with a change of the feed direction such that an entering angle is constant or substantially constant.

The step of rotating the turning tool around the tool rotational axis may be between the first pass and the second pass, i.e. after the first pass but prior to the second pass. In such a case, the turning tool rotates an angle around the tool rotational axis which is less than 360°, preferably 20° - 170°, more preferably 40° - 130°.

The step of rotating the turning tool around the tool rotational axis may alternatively be during, i.e. simultaneously, as the first pass. In such a case, the turning tool rotates an angle around the tool rotational axis which is less than 360°, preferably 5° - 180°, more preferably 10° - 170°.

The step of rotating the turning tool around the tool rotational axis may alternatively be during, i.e. simultaneously, as the second pass i.e. the step of moving the tool rotational axis in the opposite second direction.

In such a case, the turning tool rotates an angle around the tool rotational axis which is less than 360°, preferably is 5° - 180°, more preferably 10° - 170°.

The step of rotating the turning tool around the tool rotational axis may alternatively be during, i.e. simultaneously, as the first and second passes. In such a case, the turning tool during the first and second passes, respectively, rotates an angle around the tool rotational axis which preferably is 5° - 180°, more preferably 10° - 170°. In such a case the direction of rotation during the first pass is opposite to the direction of rotation during the second pass. In other words, if the rotation during the first step is clock-wise, the rotation during the second step is counter clock-wise, and vice versa.

During the first and second passes, the top surface of the cutting portion functions as a rake face or a rake surface.

According to an embodiment the method comprises the further step of during the second pass machining at least a portion of a machined surface from the first pass.

By such a turning method, a predefined feature can be machined in a shorter time. For example, compared to conventional longitudinal turning using multiple passes where all passes are in the same direction, the present method is faster because there may be less movement from a end position of the first pass to a start position for the subsequent second pass.

Especially, a predefined feature comprising a depression or a pocket or a groove, formed in the lateral surface or a base surface of the metal work piece, can be machined in a shorter time, because only one cutting portion is necessary.

The first pass precedes the second pass. Preferably at least 50%, even more preferably at least 80% of a machined surface from the first pass is machined during the second pass.

Preferably, a distance between a start position for the first pass to an end position for the second pass is shorter than a distance between the start and end positions for the first pass.

The first pass and the second pass may each be at least partly arc shaped.

According to an embodiment, the method comprises the further steps of during the first pass, rotating the cutting tool in a first direction around the tool rotational axis, and during the first second pass, rotating the cutting tool in a second direction around the tool rotational axis wherein said second direction is opposite to said first direction.

By such a method, where the cutting tool rotates during the first and second passes, a more complicated shaped predefined feature can be machined using only one nose portion.

By such a method, a predefined feature such as a concave pocket can be machined in such that the entering angle can be selected at each moment to achieve good chip control and/or surface finish.

The moving of the tool rotational axis in the first and second directions, respectively, is preferably non-linear. In other words, the first and second passes are along non-straight lines or tool paths.

Preferably, the first and second passes are along concave lines or tool paths.

The method thus comprises the steps of during the first pass, i.e. while the first cutting edge is active, rotating the cutting tool in a first direction around the tool rotational axis, and during the second pass, i.e. while the second cutting edge is active rotating the cutting tool in a second direction around the tool rotational axis, where said second direction is opposite to said first direction. For example, if the rotation during the first pass is clock-wise, the rotation during the second pass is anti-clock-wise, and vice versa.

The rotation during the first and/or second passes may comprise both clock-wise and anti-clock-wise rotations.

Preferably, the rotation of the cutting tool around the tool rotational axis is such that an entering angle, i.e. a lead angle, is constant or substantially constant. In other words, preferably the feed direction and the active cutting edge form a constant or substantially constant angle relative to each other during the first and second pass, respectively.

Said entering angle is preferably less than or equal to 90°, preferably 5° - 85°.

Formulated differently, preferably the method comprises the step of setting an entering angle constant or substantially constant during the first and second steps.

The rotation of the cutting tool around the tool rotational axis during the first and second pass, respectively, defined as the angular difference between the start and end positions for the first and second pass, respectively, is preferably less than 300°, preferably 5° - 180°, more preferably 10° - 170°.

According to an embodiment, the method comprises the further steps of withdrawing the cutting tool from the metal work piece after the first pass, and rotating the cutting tool around the tool rotational axis prior to the second pass.

By such a method, the tool life and/or chip control can be improved because the orientation of the cutting tool at the entry of the second pass can be freely selected, irrespective of the orientation of the cutting tool at the end or exit of the first pass.

The moving of the tool rotational axis in the first and second directions, respectively, is may be linear or non-linear. In other words, the first and second passes are along straight lines or non-straight lines or tool paths.

The method thus comprises the step of withdrawing the cutting tool from the metal work piece, i.e. going out of cut, after the first pass, and while the cutting tool is out of cut rotating the cutting tool around the tool rotational axis prior to going into cut which is the second pass.

The rotation of the cutting tool around the tool rotational axis after the first pass but prior to the second pass is preferably less than 360°, more preferably is 20° - 170°, even more preferably 40° - 130°.

According to an embodiment, the method comprises the further steps of repeating the first and second passes in order to progressively cut a predefined feature into the metal work piece.

By such a method, a relatively deep predefined feature such as a deep pocket can be machined in a shorter time. Deep in this context means a predefined feature which requires metal removal depth which is more than two times the recommended cutting depth for the first or second cutting edge.

The method thus comprises the further steps of repeating the first and second passes such that a predefined feature, preferably in the form of a pocket or a groove, is progressively cut into a predefined location of the metal work piece.

In other words, the method comprises a series of alternating passes of the cutting tool, where subsequent passes are in opposite or substantially opposite directions.

According to an embodiment, the method comprises the further steps setting the tool rotational axis such that a tangent line of the metal work piece at the point of contact with the convex nose cutting edge intersect or substantially intersect the coupling portion.

By such a method, the tangential cutting force is directed towards the machine spindle to which the coupling portion is connected. Thereby, the risk of vibration or deflection is reduced. Thereby, a deeper pocket can be machined.

The method thus comprising the further steps setting the tool rotational axis such that a tangent line of the metal work piece at the point of contact with the convex nose cutting edge intersect the coupling portion, and such that the tool rotational axis is co-linear or substantially co-linear or parallel or substantially parallel, i.e. within 10°, to said tangent line. In other words, the direction of the tool rotational axis is co-linear or substantially co-linear or parallel or substantially parallel to a tangential force direction.

The tool rotational axis intersects or is spaced apart by a distance from a peripheral surface of the metal work piece, more specifically from the surface machined during the first and second passes. Said distance is preferably less than 80 mm, even more preferably less than 50 mm, even more preferably less than 20 mm.

According to an embodiment, the cutting portion comprising a second nose portion, wherein the first and second nose portions each form free ends of the cutting tool, wherein in a top view the first and second nose portions form an angle of more than 90° relative to each other measured around the longitudinal center axis of the intermediate portion.

By such a cutting tool, the cutting tool can be used for a longer time. A change from a used first nose portion to a new or unused second nose portion can be made in a very short time be a rotational movement controlled by a control system of a CNC-lathe.

Preferably, the first and second nose portions are permanently connected, such as preferably wherein the cutting portion is in the form of a cutting insert.

In a top view, where the top surface of the cutting portion is facing the viewer, the first and second nose portions form an angle of more than 90°, preferably 120° or 180°, relative to each other, measured around the longitudinal center axis of the intermediate portion.

Preferably, the cutting portion is 180° or 120° symmetrical or substantially symmetrical in a top view.

Preferably, in a top view a first extension line co-linear with the first cutting edge and a second extension line co-linear with the second cutting edge extends on opposite sides relative to the longitudinal center axis of the intermediate portion.

Preferably, in a top view an extension of a bisector formed between the first and second cutting edges intersect the longitudinal center axis of the intermediate portion.

According to an embodiment, the coupling portion and the intermediate portion jointly form a tool body, wherein the cutting portion being in the form of a first cutting insert, wherein a front end of the tool body is defined by a first insert seat for the first cutting insert, wherein the first cutting insert is detachably clamped in the first insert seat by clamping means, wherein the first cutting insert comprising a bottom surface opposite the top surface, wherein a side surface connects the top and bottom surfaces, wherein a mid-plane extends mid-way between the top and bottom surfaces, wherein the nose cutting edge is in top view convexly curved having a radius of curvature of 0.15 - 1.3 mm.

By such a method, where the cutting portion in the form of the first cutting insert, only the first cutting insert needs to be replaced after use, thereby making the cutting tool more economical.

The cutting tool comprises a first cutting insert, preferably made from a hard and wear resistant material suitable for metal cutting, such as preferably cemented carbide. The cutting tool comprises a tool body, preferably made from a comparably less wear resistant material such as e.g. steel. The tool body comprises the coupling portion and the intermediate portion. The coupling portion and the intermediate portion are permanently connected, thereby forming the tool body in the form of a singular body.

The tool body extends longitudinally between a rear end, defined by the clamping portion, and a front end defined by a first insert seat, or insert pocket, for the first cutting insert.

The first cutting insert is detachably or removably clamped or locked in the first insert seat by clamping means, e.g. by means of one or more screws.

The first cutting insert preferably comprises a hole for said clamping screw, wherein the hole intersecting the top and bottom surfaces of the first cutting insert. Said hole preferably defines a first cutting insert center axis. The first cutting insert center axis is preferably co-linear with or parallel to the rotational axis.

The first cutting insert comprises a bottom surface opposite the top surface. The top surface comprises a rake face. A side surface connects the top and bottom surfaces. The side surface comprises a clearing surface. The first, second and nose cutting edges are formed at intersections between the side surface and the top surface.

A mid-plane extends mid-way between the top and bottom surfaces. Preferably, said mid-plane is perpendicular to the longitudinal center axis of the intermediate portion, and perpendicular to the rotational axis.

The first cutting insert may be mirror-symmetric in relation to the mid-plane. In other words, the first cutting insert may be a so called negative cutting insert.

Preferably, an area of the top surface is greater than an area of the bottom surface, where said areas are defined as the area inside the outer boundary lines of said surfaces. In other words, preferably the first cutting insert is a positive cutting insert. Such an insert give an improved clearance.

Preferably, the top and bottom surfaces are shaped such that the shapes thereof corresponds or substantially corresponds. For example, if the top surface is generally triangular-shaped, the bottom surface is preferably triangular shaped. Other suitable shapes include a rhombic shape. Preferably the first cutting insert comprises rotational locking means co-operating with first insert seat rotational locking means.

Said first cutting insert rotational locking means, or rotation preventing means, are preferably formed in the bottom surface of the first cutting insert, preferably in the form of one or more protrusions or recesses, even more preferably in the form of one or more grooves or ridges.

The nose cutting edge is in top view convexly curved having a radius of curvature of 0.15 - 1.3 mm. In other words, in a top view the nose cutting edge is arch-shaped. The nose cutting edge may in top view have a shape of a circular arch. Alternatively, the nose cutting edge may in top view have a shape which is arch-shaped but deviates from a perfect circular arch, such as e.g. a shape commonly known as a wiper nose radius or a wiper radius or a wiper design.

In a top view, the first and the second nose portions preferably extend radially outside a front end of the tool body, i.e. radially outside the insert seat.

In a top view the intermediate portion preferably is inside an outer boundary line of the coupling portion.

The front end of the intermediate portion, i.e. the front end of the tool body, preferably consists of exactly one insert seat.

According to an embodiment, the method comprises the further steps of withdrawing the cutting tool from the metal work piece, and rotating the cutting tool around the tool rotational axis such that the first nose portion is moved away from the metal work piece and such that the second nose portion is moved towards the metal work piece.

By such a method, the indexing time is reduced, because change from a used first nose portion in an active position to a second new nose portion in an active position can be made in a short time. Conventionally in turning, indexing is made manually and involves the step of removing the cutting insert from the insert seat. Alternatively, change to a new nose portion can be made by an automatic or manual step which involves removing the used cutting tool from the machine interface. Compared to the above described conventional methods using conventional cutting tool, the present cutting tool provides a less time-consuming option.

The method thus comprises the step of withdrawing the cutting tool from the metal work piece preferably after the second pass. The cutting tool is withdrawn by enough distance such that sufficient clearance is provided, in order to avoid interference during the subsequent rotation. Said rotation means rotating the cutting tool around the tool rotational axis such that the first nose portion is moved away from the metal work piece and such that the second nose portion is moved towards the metal work piece. In other words, an indexing is made such that the used first nose portion is brought into an inactive position and such that a new second nose portion is brought into an active position.

Said rotation is preferably equal to or substantially equal to the angular difference in a top view between the first and second nose portions. Said rotation is preferably equal to or substantially equal to 90°, 120°, 180° or 240°.

Preferably, said method comprises the step of cutting the metal work piece, or a second metal work piece similar or substantially similar to the said metal work piece, using the second nose portion in a corresponding way as for the first nose portion.

According to an embodiment, the convex nose cutting edge intersects or substantially intersects the tool rotational axis, wherein the longitudinal center axis being parallel to and spaced apart from the tool rotational axis.

By such a cutting tool, the positioned for the convex nose cutting edge can be determined in a more convenient manner, thereby making programming of a CNC-lathe easier.

By such a cutting tool, a deeper pocket can be machined because the risk of interference is reduced, when using the second nose portion, especially if the first and second nose portions in a top view form an angle of 180° or substantially 180°.

The convex nose cutting edge intersects or substantially intersects the tool rotational axis. Substantially intersects in this context shall be interpreted such as a mid-point of the convex nose cutting edge is positioned within 0.5 mm from the tool rotational axis.

According to an embodiment, the first and second nose portions are arranged symmetrically in relation to the longitudinal center axis, wherein the longitudinal center axis being co-linear with the tool rotational axis.

By such a cutting tool, an indexing of the first cutting insert can be made in a less complicated way if the first cutting insert is inside a narrow cavity or a narrow pocket. Indexing in this context is made through rotation of the cutting tool around the rotational axis thereof by an angle, preferably 120° or 180°, such that one cutting portion is positioned in an active position. By such a cutting tool, the cutting tool can be used for a long time without changing the cutting portion.

Preferably, the cutting portion in a top view comprises at least two but not more than three nose portions.

For example, the cutting portion may comprise two nose portions arranged 180° relative to each other in a top view. In such a case, the tool rotational axis extends mid-way between the first and second nose portions.

In another example, the cutting portion may comprise three nose portions arranged 120° relative to each other in a top view. In such a case, the tool rotational axis extends mid-way between the first, second and third nose portions.

Preferably, a bisector extending between the first and second cutting edges intersects the longitudinal center axis.

According to an embodiment, the cutting tool comprises a second cutting insert clamped in a second insert seat, wherein the second insert seat is formed in the intermediate portion of the tool body, wherein the second insert seat is positioned longitudinally between and spaced apart from the first cutting insert and the coupling portion, wherein the method comprises the further steps of withdrawing the cutting tool from the metal work piece, and moving the cutting tool in a forward direction along the tool rotational axis.

By such a cutting tool, the time for machining a component can be further reduced, because the change from the first cutting insert to the second cutting insert can be made in a short time.

The cutting tool, more precisely the tool body, comprises a second cutting portion in the form of a second cutting insert clamped or removably fastened, preferably by means of a clamping screw, in a second insert seat.

Preferably, the second cutting insert is different in shape in a top view compared to the first cutting insert. For example, the second cutting insert may be a threading insert or a grooving insert, while the first cutting insert is a turning insert.

The second insert seat is formed in the intermediate portion of the tool body longitudinally between and spaced apart from the first cutting insert and the coupling portion. In other words, the second insert seat is placed rearward of the first insert seat.

Preferably, the second cutting insert is removably fastened in the second insert seat such that at least one nose portion of the second insert is positioned compared to the first nose portion is placed at a greater distance from the longitudinal center axis of the intermediate portion.

Preferably, the second cutting insert is removably fastened in the second insert seat such that at a second cutting insert nose portion in an active position (i.e. radially outer position) in a top view forms equally large angels or substantially equally large angels in relation to the first and second nose portions. For example, when the cutting tool is seen in top view, the first cutting insert may comprise two nose portions which are placed at 6 o'clock and at 12 o'clock, and the second cutting insert may comprise a radially outer nose portion which is placed at approximately 3 o'clock, or alternatively at approximately 9 o'clock, where the time references refers to an analogue 12-hour watch. By such a cutting tool, the clearance is further improved.

Preferably, the cutting tool comprises a third insert seat. Preferably, the third insert seat is positioned opposite or substantially opposite the second insert seat in relation to the longitudinal center axis of the intermediate portion.

Preferably, the third insert seat and the second insert seat are positioned longitudinally at equal distances or substantially equal distances from the clamping portion.

The method comprises the further step of withdrawing the cutting tool from the metal work piece for providing enough clearance or space to avoid crash or contact during the subsequent movement.

The method comprises the further step moving the cutting tool in a forward direction along the tool rotational axis. In other words, the method comprises a longitudinal motion of the cutting tool such that the first cutting insert is brought further away from the metal work piece and such that the second cutting insert is brought closer to the metal work piece.

Said method preferably further comprises the step of rotating the cutting tool around the tool rotational axis by a predetermined angle, such that the second cutting insert is in an active position. Said predetermined angle is preferably within the range of 30°- 330°, even more preferably within the range of 80°- 100°.

Preferably, the distance of said moving in a forward direction is equal to or substantially equal to a longitudinal distance between the first and second cutting inserts.

According to an embodiment, the method comprises the further step of setting the maximum chip thickness to be constant or substantially constant during the first pass and/or the second pass.

By such a method, the tool life and/or productivity is further improved, especially when machining where a geometrical limitation make constant entering angle not possible.

The maximum chip thickness hₓ, also known as undeformed chip thickness, sometimes called "hex", is defined as the feed rate per revolution f multiplied with the sinus function of the entering angle K, also known as lead angle, such that hₓ = *f* x sin K. The feed rate per revolution f is in profiling, i.e. where the feed comprises a radial and a longitudinal component, equal to the sum of the radial and longitudinal components. In other words, said feed rate f at a point is equal to the vector sum of the longitudinal and radial feed components at said point. By substantially constant maximum chip thickness means that the maximum chip thickness hₓ varies within +/- 25 % during at least 90 % of the first and/or second pass. The entering angle K is defined as the angle between the feed direction and the active main cutting edge. During the first pass, the first cutting edge is the active main cutting edge. During the second pass, the second cutting edge is the main cutting edge. Said entering angle K is preferably less than or equal to 90°, preferably 5° - 85°.

According to an embodiment, a computer program having instructions which when executed by a computer numerical control lathe cause the computer numerical control lathe to perform the above defined turning method.

By such a computer program, said turning method can be easily implemented on numerous CNC-lathes or CNC-machines.

Said computer program having instructions for controlling movement and rotation of the cutting tool, and instructions for rotation of the metal work piece, for removing stock by means of a turning operation according to the above defined method.

Said instructions may include cutting data such as cutting speed, feed rate, tool path and cutting depth.

### DESCRIPTION OF THE DRAWINGS

The present invention will now be explained in more detail by a description of different embodiments of the invention and by reference to the accompanying drawings.
- Fig. 1: is a perspective view of a tool body which is part of a first cutting tool.
- Fig. 2: is a perspective view of the first cutting tool.
- Fig. 3: is a perspective view of the insert seat of the tool body in Fig. 1.
- Fig. 4: is a side view of the cutting tool in Fig. 2.
- Fig. 5: is a further side view of the cutting tool in Fig. 2.
- Fig. 6: is a side view of a second cutting tool.
- Fig. 7: is a perspective view of the cutting tool in Fig. 6.
- Fig. 8: is a top view of the cutting tool in Fig. 6.
- Fig. 9: is a perspective view of a third cutting tool.
- Fig. 10: is a side view of the cutting tool in Fig. 9.
- Fig. 11: is a perspective view of the tool body in Fig. 9.
- Fig. 12: is a perspective view of the insert seat of the tool body in Fig. 11.
- Fig. 13: is a perspective view of the cutting insert in Fig. 9.
- Fig. 14: is a side view of the cutting insert in Fig. 13.
- Fig. 15: is a top view of the cutting insert in Fig. 13.
- Fig. 16: is a further perspective view of the cutting insert in Fig. 13.
- Fig. 17: is a side view of a fourth cutting tool.
- Fig. 18: is a further side view of the cutting tool in Fig. 17.
- Fig. 19: is a perspective view of the cutting tool in Fig. 17.
- Fig. 20: is a top view of the cutting tool in Fig. 17.
- Fig. 21: is a start of a first pass according to a first turning method embodiment using the cutting tool in Fig. 6.
- Fig. 22: is an end of the first pass shown in Fig. 21..
- Fig. 23: is a start of a second pass according to a first turning method embodiment using the cutting tool in Fig. 6.
- Fig. 24: is an end of a second pass shown in Fig. 23.
- Fig. 25: is an illustration of a first pass according to a second turning method embodiment using the cutting tool in Fig. 9.
- Fig. 26: is an illustration of a second pass according to a turning method using the cutting tool in Fig. 9.
- Fig. 27: is an illustration of multiple passes according to a third turning method embodiment.
- Fig. 28: is a side view of a turning method using the cutting tool in Fig. 9.
- Fig. 29: is a side view of a turning method using the cutting tool in Fig. 9.
- Fig. 30: is a side view of a turning method in Figs. 25 and 26.
- Fig. 31: is a perspective view of the cutting tool and metal work piece shown in Fig. 28.
- Fig. 32: is a side view of a fourth turning method embodiment using the cutting tool in Fig. 17.
- Fig. 33: is a side view of a fourth turning method embodiment using the cutting tool in Fig. 17.
- Fig. 34: is a side view of a fifth turning method embodiment using the cutting tool in Fig. 6.

All cutting tool and cutting insert figures have been drawn to scale.

### DETAILED DESCRIPTION OF EMBODIMENTS OF THE INVENTION

The invention will now be described more in detail, and examples of cutting tools which can be used to perform the method according to the invention are described. Four cutting tools, or four embodiments of cutting tools, first - fourth cutting tools, are explained in more detail. Such cutting tools have been found to be particularly suitable for performing the above described turning method.

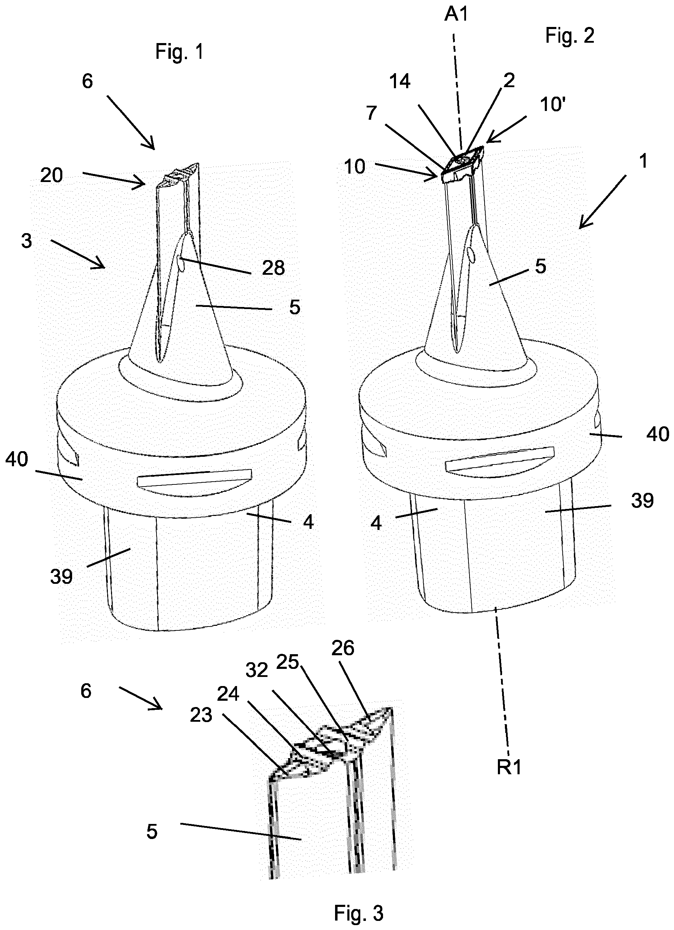

Reference is made to Figs. 1-5 which shows a first cutting tool 1 comprising a tool body 3 and a cutting insert 2. The tool body 3 is shown in Fig. 1 without the cutting insert 2. The cutting tool comprises an insert seat 6 which is shown in Fig. 3. The cutting tool 1 is a turning tool, comprising a coupling portion 4, an intermediate portion 5 and a cutting portion 2. The coupling portion 4 and the intermediate portion 5 are permanently connected and jointly form a tool body 3 made from steel. The cutting portion 2 is in the form of a first cutting insert 2 made from cemented carbide. The cutting tool 1 according to the first embodiment comprises only one cutting insert.

The coupling portion 4 is suitable to a rotatable machine interface (not shown). The coupling portion 4 comprise a substantially conical or tapered portion 39 and a ring shaped portion 40 in accordance to ISO 26623-1:2014.

A front end 20 or a forward end of the tool body 3 is defined by a first insert seat 6 for the first cutting insert 2. The first cutting insert 2 is detachably clamped in the first insert seat 6 by clamping means 14, said clamping means being in the form of a clamping screw 14.

The first cutting insert 2 comprises a bottom surface 8 opposite a top surface 7. A side surface 9 connects the top and bottom surfaces 7, 8. As seen in Fig. 4, a mid-plane M1 extends mid-way between the top and bottom surfaces 7, 8.

The intermediate portion 5 extends between the coupling portion 4 and the cutting portion 2.

A longitudinal center axis of the coupling portion 4 defines a tool rotational axis R1.

The intermediate portion 5 extends along a longitudinal center axis A1 thereof.

For the cutting tool 1 according to the first embodiment, the longitudinal center axis A1 is co-linear or co-axial with the tool rotational axis R1, as seen in Figs. 2, 4 and 5.

The mid-plane M1 is perpendicular to the longitudinal center axis A1 of the intermediate portion 5, and perpendicular to the rotational axis R1. The top surface 7 of the first cutting insert 2 is facing away from the coupling portion 4. The top surface 7 is non-planar, and comprises chip breaking means or chip breakers, in the form of protrusions.

The first cutting insert 2 comprises a first and a second nose portion 10, 10', which each form free ends of the cutting tool 1.

The first nose portion 10 comprising a first cutting edge 11, a second cutting edge 12, both straight in a top view, and a convex nose cutting edge 13 connecting the first and second cutting edges 11, 12. The convex nose cutting edge 13 is convex in a top view. The nose cutting edge 13 is in top view convexly curved having a radius of curvature of 0.15 - 1.3 mm. Although a top view of the cutting tool according to the first embodiment is not shown, a top view of the first cutting insert 2 according to the first embodiment is shown in Fig. 8 which show an identical cutting insert. According to the first embodiment, the radius of curvature is 0.4 mm. The first and second cutting edges 11, 12 forms a nose angle which is 35°.

In a top view, the first and second nose portions 10, 10' form an angle of 180° relative to each other measured around the longitudinal center axis A1 of the intermediate portion 5.

The first cutting insert 2 is 180° symmetric in top and bottom views. The first cutting insert is in a top view parallelogram-shaped.

As seen in Fig. 3, the first insert seat 6 comprises first insert seat rotational locking means comprising ridges 23-26, where two ridges 23, 26 are co-linear, and two ridges 24, 25 are parallel.

The first cutting insert 2 comprises first cutting insert rotational locking means in the form of grooves (not shown), formed in the bottom surface 8, co-operating with the first insert seat rotational locking means 23-26. The first cutting insert 2 comprises a hole for the clamping screw 14. Said hole 13 intersects the top and bottom surfaces 8, 9, and a centre axis thereof defines a first cutting insert center axis co-linear with the rotational axis R1 and the longitudinal center axis A1.

The cutting tool 1 comprising a coolant channel formed in the tool body 3 and extending between the coupling portion 4 and a nozzle 28. Said nozzle 28 is formed in the intermediate portion 5, and the coolant channel and the nozzle 28 are arranged to direct a coolant fluid towards the first and second nose portions 10, 10'.

Reference is now made to Figs. 9-16 showing a second cutting tool 1, comprising a cutting insert 2. The principal differences compared to the first cutting tool relates to the designs of the cutting insert 2 and the insert seat 6.

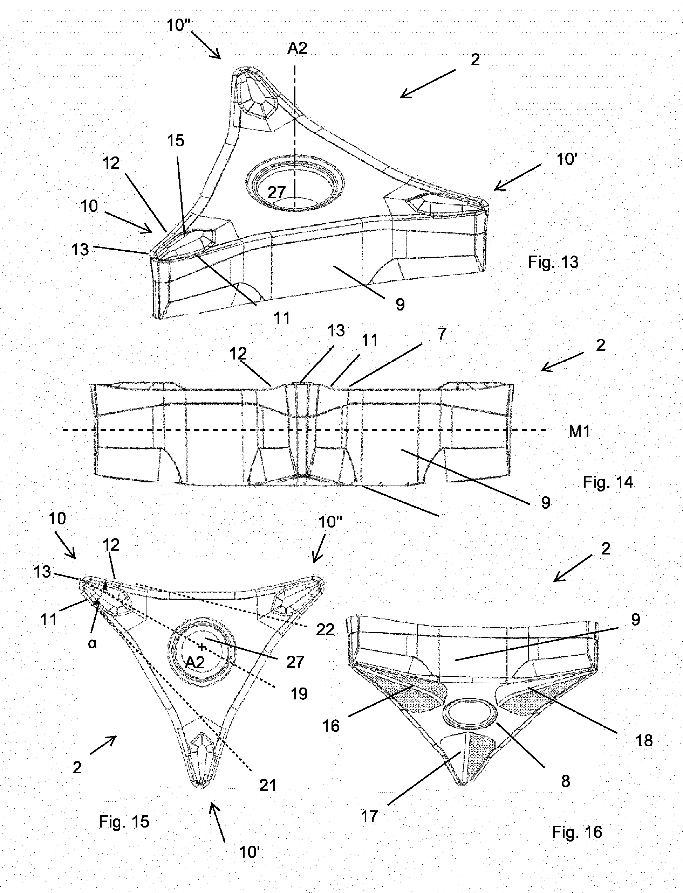

In a top view as seen in Fig. 15, a first extension line 21 co-linear with the first cutting edge 11 and a second extension line 22 co-linear with the second cutting edge 12 extends on opposite sides relative to the first cutting insert center axis A2, which axis is co-linear with the rotational axis R1 and the longitudinal center axis A1 when the cutting insert 2 is mounted in the insert seat 6. The previous sentence is true also for the cutting tool 1 according to the first embodiment.

The first cutting insert 2 comprises three nose portions 10, 10', 10". The first cutting insert 2 is 120° symmetrical in top and bottom views.

In a top view as seen in Fig. 15 the first and second cutting edges 11, 12 forms a nose angle α which is 35°.

As seen in Fig. 12, the first insert seat 6 comprises first insert seat rotational locking means comprising ridges 23-25, where said ridges 23-25 extend radially in relation to a hole 32 for the clamping screw 14 formed in the first insert seat 6.

The first cutting insert 2 comprises first cutting insert rotational locking means comprising grooves 16-18 formed in the bottom surface 8, co-operating with the first insert seat rotational locking means 23-26.

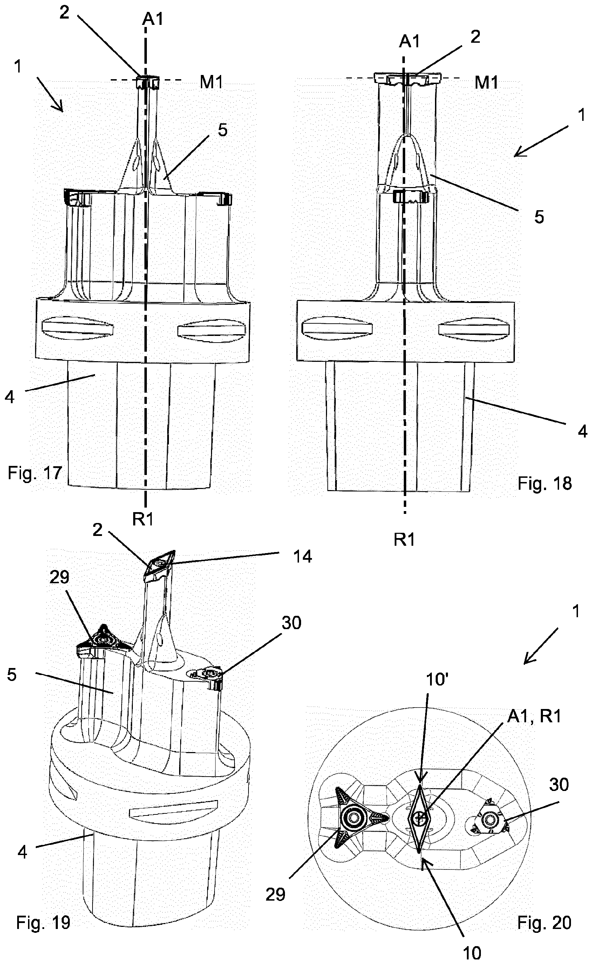

Reference is now made to Fig 17-20, showing a fourth cutting tool 1. The fourth cutting tool 1 principally differs from the first cutting tool in that the cutting tool 1 comprises a second and a third cutting insert 29, 30, clamped our mounted in a second and third insert seat, respectively. Said second and third insert seats are formed in the intermediate portion 5 of the tool body 3 longitudinally between and spaced apart from the first cutting insert 2 and the coupling portion 4.

The second cutting insert 29 and the third cutting insert 30 is each different in shape in a top view compared to the first cutting insert 2. The third cutting insert 30 is a threading insert.

The second and third cutting insert 29, 30 each comprises nose portions, where each of said nose portions comprises a set of cutting edges. Compared to the first cutting insert 2, the second and third cutting inserts 29, 30 are placed at a greater distance from the longitudinal center axis A1 of the intermediate portion 5.

In a top view as seen in Fig. 20, the second and third cutting inserts 29, 30 forms equally large angles or substantially equally large angles in relation to the first and second nose portions. In Fig. 20, the first cutting insert comprise two nose portions 10, 10' which are placed at 6 o'clock and at 12 o'clock, respectively. The second cutting insert 29 is placed at 9 o'clock, and the third cutting insert 30 is placed at 9 o'clock, where the time references refers to an analogue 12-hour watch and relates to the relative position in relation to the longitudinal center axis A1. By such a cutting tool, the clearance is further improved.

As seen in Fig. 17, the second and third cutting inserts 29, 30 are positioned longitudinally at equal distances or substantially equal distances from the clamping portion 4.

Reference is now made to Fig 6-8, showing a second cutting tool 1. The second cutting tool 1 principally differs from the first cutting tool in that for the second cutting tool 1, the longitudinal center axis A1 is parallel to and spaced apart from the tool rotational axis R1, and the convex nose cutting edge 13 of the first nose portion 10 intersects or substantially intersects the tool rotational axis R1. In other words, the intermediate portion 5 is offset in relation to the tool rotational axis R1. A mid-point of the convex nose cutting edge 13 of the first nose portion 10 is positioned less than or equal to 0.5 mm from the tool rotational axis R1.

In other respects, the second cutting tool 1 is similar to the first cutting tool. For example, in a top view as seen in Fig. 8 a first extension line 21 co-linear with the first cutting edge 11 and a second extension line 22 co-linear with the second cutting edge 12 extends on opposite sides relative to the longitudinal center axis A1 of the intermediate portion 5.

In accordance with the first, third and fourth embodiment, in a top view as seen in Fig. 8, the intermediate portion 5 and the first cutting insert 2 is inside an outer boundary line of the coupling portion 4.

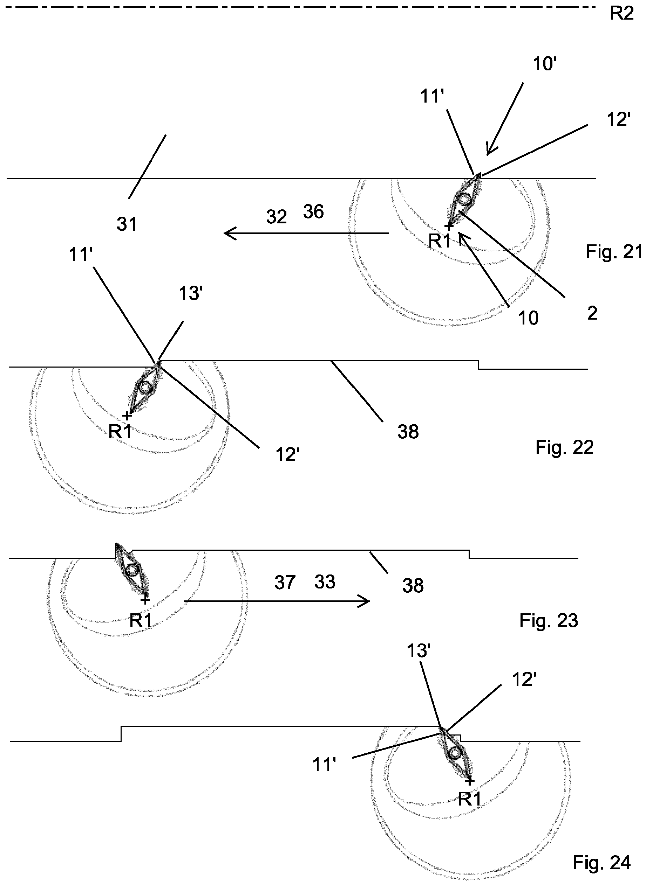

Reference is now made to Figs. 21-24 showing a turning method according to a first embodiment for a computerized numerical control lathe (not shown). The second cutting tool 1 is provided, although any of the above described cutting tools may be used. The cutting insert 2 comprises first and second nose portions 10, 10'. In the method in Figs. 21-24, the second nose portion 10' is in an active position. The method can alternatively be performed where the first nose portion 10 is in an active position. In such case, the cutting tool 1 is 180° rotated around the tool rotational axis R1.

A metal work piece 31 is provided, which rotates around a work piece rotational axis R2. The tool rotational axis R1 is perpendicular to the work piece rotational axis R2. In the example, the work piece rotational axis R2 is in a horizontal position and the tool rotational axis R1 is in a vertical position. One possible alternative is to arrange the work piece rotational axis R2 is in a vertical position and the tool rotational axis R1 in a horizontal position.

The method comprises the step of making a first pass 36 by moving the cutting tool 1, seen in top view, such that the first cutting edge 11' is active, such that the second cutting edge 12' is inactive, and such that a machined surface 38 is formed by the nose cutting edge 13'. The start of the first pass 36 is shown in Fig. 21. The end or the finish of the first pass is shown in Fig. 22.

The method comprises the step of making a second pass 37 by moving the cutting tool 1 such that the first cutting edge 11' is inactive, such that the second cutting edge 12' is active, and such that at least a portion of a machined surface 38 from the first pass 36 is machined, where the second pass is longitudinally or radially opposite or substantially opposite to the first pass. The start of the second pass 37 is shown in Fig. 23. The end or the finish of the second pass is shown in Fig. 24. For the method shown in Figs. 21-24, the second pass is longitudinally opposite to the first pass.

As can be seen from Figs. 21 and 22, said first pass is linear. Thus, said first pass can be defined by a component 32 which is parallel to the work piece rotational axis R2, i.e. along the work piece rotational axis R2.

As can be seen from Figs. 23 and 24, said second pass is linear. Thus, said second pass can be defined by a component 33 which is parallel to the work piece rotational axis R2 and opposite to the component 32 for the first direction.

As can be seen in Figs. 21 and 22, the start and end position for the first pass 36 are spaced apart.

During the first and second passes 36, 37 an entering angle is constant.

After the first pass 36 but prior to the second pass 37, the cutting tool 1 is withdrawn from the metal work piece 31.

After the withdrawing of the cutting tool 1 but prior to the second pass 37, the cutting tool 1 is rotated around the tool rotational axis R1 by an angle which is in the range of 40° - 130°.

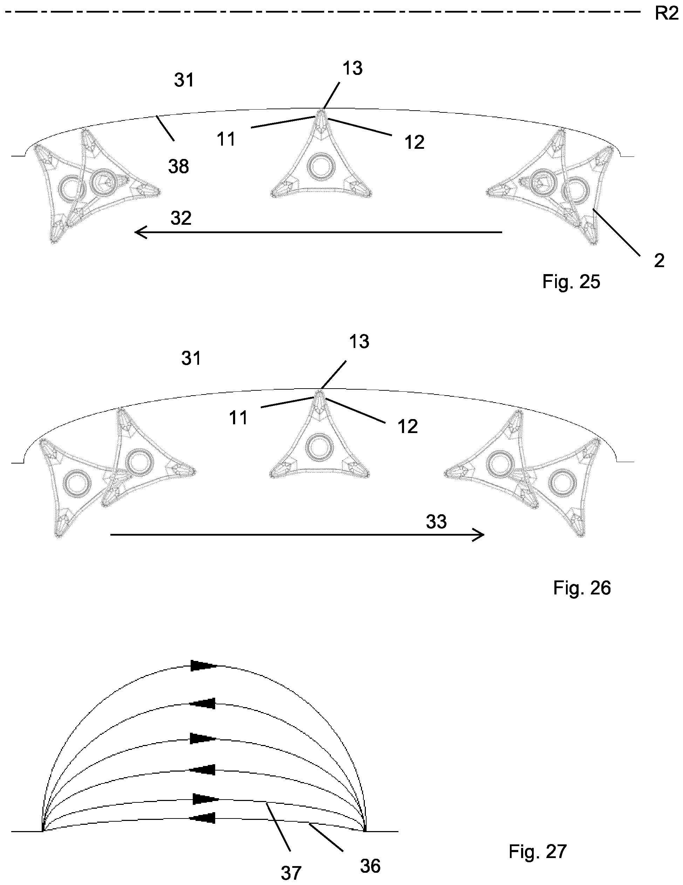

Attention is now drawn to Figs. 25-26, which show a turning method according to a second embodiment using the third cutting tool. Only the cutting insert 2 of the cutting tool is shown. The method can be used using any of the above described cutting tools.

A metal work piece 31 is provided, which rotates around a work piece rotational axis R2. The tool rotational axis (not shown) is perpendicular to the work piece rotational axis R2. The method comprises the step of making a first pass, shown in Fig. 25, by moving the cutting tool such that the first cutting edge 11 is active, such that the second cutting edge 12 is inactive, and such that a machined surface 38 is formed by the nose cutting edge 13. Five positions of the cutting insert 2 is shown, starting from the right-hand side and moving towards the left-hand side.

The method comprises the step of making a second pass, shown in Fig. 26, by moving the cutting tool such that the first cutting edge 11 is inactive, such that the second cutting edge 12 is active, and such that at least a portion of a machined surface 38 from the first pass is machined. During the first pass the cutting tool rotates in a first direction, counterclockwise in Fig. 25, around the tool rotational axis.

During the second pass the cutting tool rotates in a second direction around the tool rotational axis, where said second direction, clock-wise in Fig. 26, is opposite to said first direction.

During the first pass as seen in Fig. 25, the cutting tool is moved along a non-linear or curved line. The first pass comprises a longitudinal component 32 which is towards the left-hand side.

During the second pass as seen in Fig. 26, the cutting tool is moved along a non-linear or curved line. The second pass comprises a longitudinal component 33 which is towards the right-hand side, i.e. opposite to the longitudinal component 32 of the first pass.

During the first and second passes, an entering angle is constant.

After the first pass but prior to the second pass, the cutting tool is withdrawn from the metal work piece 31.

Attention is now drawn to Fig. 27, which show a turning method according to a third embodiment. Any of the above described turning tools can be used. A first and second pass 36, 37 is shown. Said first and second passes 36, 37 are similar or substantially similar to the turning method according to the second embodiment. The first and second passes 36, 37 are repeated in order to progressively cut a predefined feature into the metal work piece. In other words, the turning method according to the third embodiment comprises a series of alternating passes of the cutting tool, where subsequent passes are in opposite or substantially opposite directions.

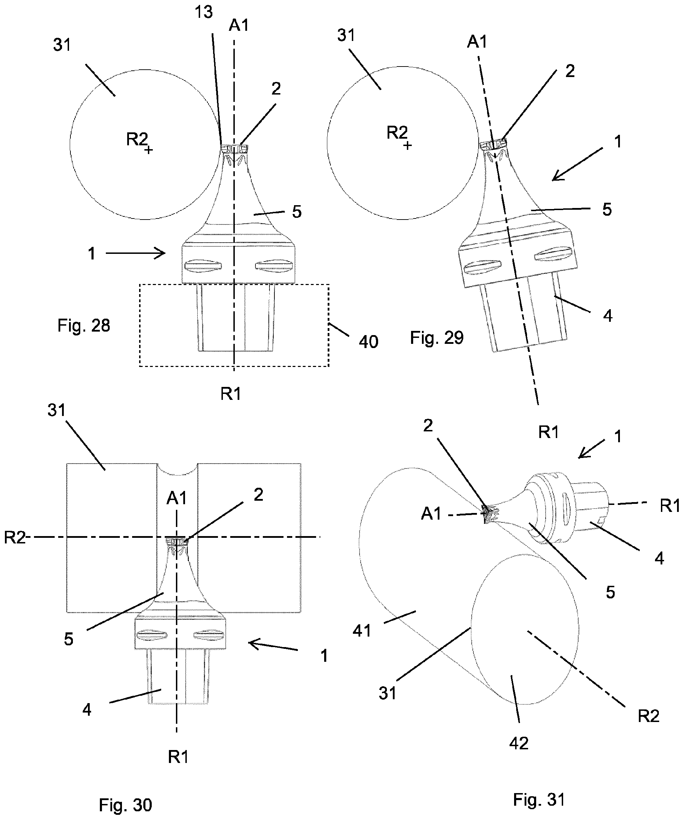

Attention is now drawn to Fig. 28, showing in a side view the relative position and orientation of a metal work piece 31 and the third cutting tool 1. Alternatively, any other of the above described cutting tools can be used. The cutting tool 1 comprises a coupling portion 4 clamped to a machine interface 40 of a CNC-lathe (not shown), an intermediate portion 5 and a cutting portion 2 in the form of a cutting insert. The CNC-lathe (not shown) can be instructed to perform the turning method by instructions in a computer program, a computer readable medium or a data stream. A longitudinal center axis of the coupling portion 4 defines a tool rotational axis R1. The intermediate portion 5 extends along a longitudinal center axis A1 thereof. The cutting portion 2 comprises a top surface facing away from the coupling portion 4.

The metal work piece 31 rotates around a work piece rotational axis R2 in a clock-wise direction in Fig. 28.

The tool rotational axis R1 is perpendicular to the work piece rotational axis R2. The tool rotational axis R1 is arranged such that a tangent line of the metal work piece 31 at the point of contact with the convex nose cutting edge 13 intersect the coupling portion 4. The tangential cutting force is directed towards the machine interface 40. The tool rotational axis R1 is spaced apart by a distance from a peripheral surface of the metal work piece 31. The tool rotational axis R1 is parallel to said tangent line.

Attention is now drawn to Fig. 29, showing the relative position and orientation of a metal work piece 31 and the third cutting tool 1. The arrangement in Fig. 29 differs from Fig. 28 only in that the tool rotational axis R1 is not parallel to said tangent line, but forms an angle less than or equal to 10° in relation to said tangent line.

Attention is now drawn to Fig. 30, showing a side view of the center position of the cutting insert 2 from Figs. 25 and 26, including the cutting tool 1.

Attention is now drawn to Fig. 31, showing a perspective view of the arrangement shown in Fig. 28. The metal work piece 31 shown is cylindrical and comprises a lateral surface 31, i.e. a surface facing away from the work piece rotational axis R2, and a base surface 42, i.e. a surface facing in a direction parallel to the work piece rotational axis R2. The metal work piece 31 comprises a second base surface, facing away from the viewer. In the first, second, third and fourth turning methods describe above, machining is made in a lateral surface 41 of a metal work piece 31. In the fifth turning method described below, machining is made in a base surface 42 of a metal work piece 31.

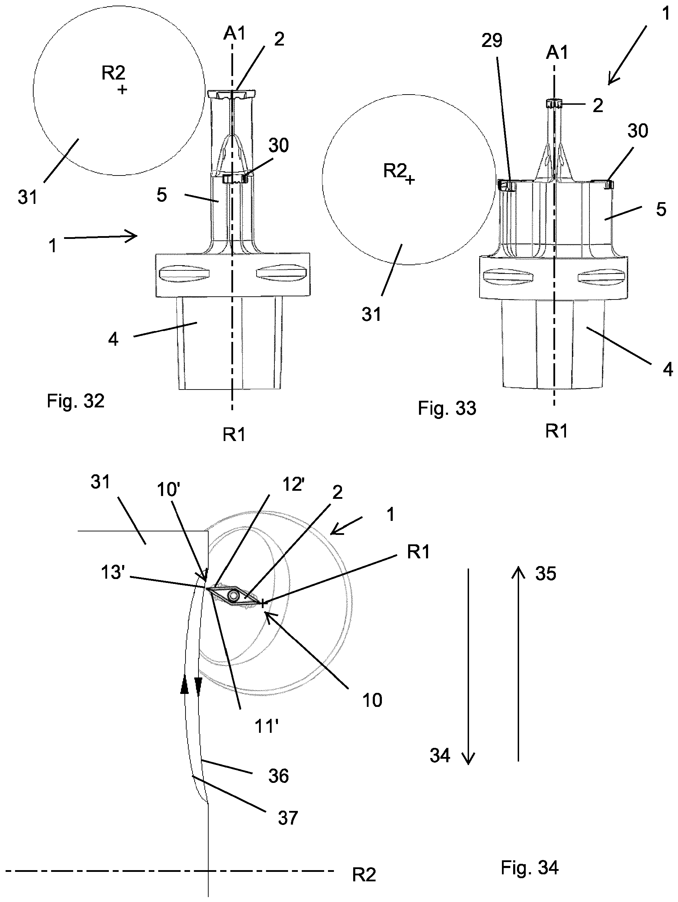

Attention is now drawn to Figs. 32 and 33, showing a turning method according to a fourth embodiment, using the fourth cutting tool 1.

The method includes any of the above described turning methods, using the first cutting insert 2, where the fourth cutting tool 1 is in a position relative to the metal work piece 31 as shown in Fig. 32. The method further comprises the steps of withdrawing the cutting tool 1 from the metal work piece 31, and moving the cutting tool 1 in a forward direction along the tool rotational axis R1 to the position shown in Fig. 33. The method further comprises the step of rotating the cutting tool 1 around the tool rotational axis R1 by a predetermined angle, such that the second cutting insert 29 is in an active position. Said predetermined angle is within the range of 80°- 100°

Reference is now made to Fig. 34, showing a turning method according to a fifth embodiment using the second cutting tool 1, although any of the above described cutting tools may be used.

A metal work piece 31 is provided, which rotates around a work piece rotational axis R2. The tool rotational axis R1 is perpendicular to the work piece rotational axis R2.

Unlike the previous described turning methods, the machining during the turning method according to the fifth embodiment is made at a base surface of the metal work piece 31.

The tool rotational axis R1 is perpendicular to the work piece rotational axis R2. In the example, both the work piece rotational axis R2 and the tool rotational axis R1 is in a horizontal position. One possible alternative is to arrange both the work piece rotational axis R2 and the tool rotational axis R1 in a vertical position.

The cutting insert 2 comprises first and second nose portions 10, 10'. In the method in Fig. 34, the second nose portion 10' is in an active position.

The method can alternatively be performed where the first nose portion 10 is in an active position. In such case, the cutting tool 1 is 180° rotated around the tool rotational axis R1.

The method comprises the step of making a first pass 36 by moving the cutting tool such that the first cutting edge 11' is active, such that the second cutting edge 12' is inactive, and such that a machined surface is formed by the nose cutting edge 13'.

The method comprises the step of making a second pass 37 by moving the cutting tool such that the first cutting edge 11' is inactive, such that the second cutting edge 12' is active, and such that at least a portion of a machined surface from the first pass 37is machined.

During the first pass the cutting tool rotates in a first direction, counterclockwise in Fig. 34, around the tool rotational axis R1.

During the second pass 37 the cutting tool rotates in a second direction around the tool rotational axis, where said second direction, clock-wise in Fig. 34, is opposite to said first direction.

During the first pass 36 the cutting tool is moved along non-linear or curved path. The first pass comprises a radial component 34 which is perpendicular to and towards the work piece rotational axis R2, downwards in Fig. 34.

During the second pass 37 the cutting tool is moved along a path which is non-linear or curved. The second pass comprises a radial component 35 which is perpendicular to and away from the work piece rotational axis R2, upwards in Fig. 34, i.e. opposite to the radial component 34 of the first pass.

During the first and second passes, an entering angle is constant.

After the first pass 36 but prior to the second pass 37, the cutting tool is withdrawn from the metal work piece 31.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "upwards", "lower", "top", "bottom", "forward", "front" and "rear" refer to features as shown in the current drawings and as perceived by the skilled person.

## Claims

1. A turning method for a computerized numerical control lathe comprising the steps of:
- providing a cutting tool (1) comprising a coupling portion (4), an intermediate portion (5) and a cutting portion (2), the intermediate portion (5) extending between the coupling portion (4) and the cutting portion (2), a longitudinal center axis of the coupling portion (4) defining a tool rotational axis (R1), the intermediate portion (5) extending along a longitudinal center axis (A1) thereof, the cutting portion (2) comprising a top surface (7), the top surface (7) facing away from the coupling portion (4), the cutting portion (2) comprising a first nose portion (10), the first nose portion (10) comprising a first cutting edge (11), a second cutting edge (12), and a convex nose cutting edge (13) connecting the first and second cutting edges (11, 12);
- providing a metal work piece (31);
- rotating the metal work piece (31) around a work piece rotational axis (R2);
- setting the tool rotational axis (R1) perpendicular to or substantially perpendicular to the work piece rotational axis (R2);
- making a first pass (36) such that the first cutting edge (11) is active and such that the second cutting edge (12) is inactive,
- making a second pass (37) such that the first cutting edge (11) is inactive and such that the second cutting edge (12) is active, where the second pass (37) is in a longitudinally or radially opposite or substantially opposite direction to the first pass (36); and
- rotating the turning tool (1) around the tool rotational axis (R1) during the first pass (36) and/or during the second pass (37) and/or after the first pass (36) but prior to the second pass (37).

2. A method according claim 1, further comprising the step of during the second pass (37) machining at least a portion of a machined surface (38) from the first pass (36).

3. A method according to any preceding claim, further comprising the steps of:
during the first pass, rotating the cutting tool (1) in a first direction around the tool rotational axis (R1), and
during the first second pass, rotating the cutting tool (1) in a second direction around the tool rotational axis (R1) wherein said second direction is opposite to said first direction.

4. A method to any preceding claim, further comprising the steps of:
withdrawing the cutting tool (1) from the metal work piece (31) after the first pass (36),
and rotating the cutting tool (1) around the tool rotational axis (R1) prior to the second pass (37).

5. A method according to any preceding claim, comprising the further steps of repeating the first and second passes in order to progressively cut a predefined feature into the metal work piece (31).

6. A method according to any preceding claim, comprising the further steps setting the tool rotational axis (R1) such that a tangent line of the metal work piece (31) at the point of contact with the convex nose cutting edge (13) intersect or substantially intersect the coupling portion (4).

7. A method according to any preceding claim,
wherein the cutting portion (2) comprising a second nose portion (10'),
wherein the first and second nose portions (10, 10') each form free ends of the cutting tool (1),
wherein in a top view the first and second nose portions (10, 10') form an angle of more than 90° relative to each other measured around the longitudinal center axis (A1) of the intermediate portion (5).

8. A method according to any preceding claim, wherein the coupling portion (4) and the intermediate portion (5) jointly form a tool body (3),
wherein the cutting portion (2) being in the form of a first cutting insert (2),
wherein a front end (20) of the tool body (3) is defined by a first insert seat (6) for the first cutting insert (2),
wherein the first cutting insert (2) is detachably clamped in the first insert seat (6) by clamping means (14),
wherein the first cutting insert (2) comprising a bottom surface (8) opposite the top surface (7), wherein a side surface (9) connects the top and bottom surfaces (7, 8),
wherein a mid-plane (M1) extends mid-way between the top and bottom surfaces (8, 9),
wherein the nose cutting edge (13) is in top view convexly curved having a radius of curvature of 0.15 - 1.3 mm.

9. A method according to claim 7 or 8, comprising the further steps of:
withdrawing the cutting tool (1) from the metal work piece (31),
and rotating the cutting tool (1) around the tool rotational axis (R1) such that the first nose portion (10) is moved away from the metal work piece (31) and such that the second nose portion (10') is moved towards the metal work piece (31).

10. A method according to any preceding claim, wherein the convex nose cutting edge (13) intersects or substantially intersects the tool rotational axis (R1), wherein the longitudinal center axis (A1) being parallel to and spaced apart from the tool rotational axis (R1).

11. A method according to any of the claims 7 - 9,
wherein the first and second nose portions (10, 10') being arranged symmetrically in relation to the longitudinal center axis (A1),
wherein the longitudinal center axis (A1) being co-linear with the tool rotational axis (R1),

12. A method according to any of the claims 8 - 11,
wherein the cutting tool (1) comprises a second cutting insert (29) clamped in a second insert seat, wherein the second insert seat is formed in the intermediate portion (5) of the tool body (3), wherein the second insert seat is positioned longitudinally between and spaced apart from the first cutting insert (2) and the coupling portion (4),
wherein the method comprises the further steps of
withdrawing the cutting tool (1) from the metal work piece (31),
moving the cutting tool (1) in a forward direction along the tool rotational axis (R1).

13. A method according to any of the preceding claims,
comprising the further step of setting the maximum chip thickness to be constant or substantially constant during the first pass and/or the second pass.

14. A computer program having instructions which when executed by a computer numerical control lathe cause the computer numerical control lathe to perform the method according to anyone of claims 1-13.

15. A computer readable medium having stored thereon a computer program according to claim 14.

16. A data stream which is representative of a computer program according to claim 14.

## Patentansprüche

1. Drehverfahren für eine Drehmaschine mit rechnergestützter numerischer Steuerung, das die folgenden Schritte aufweist:
- Bereitstellen eines Schneidwerkzeugs (1), das einen Verbindungabschnitt (4), einen Zwischenabschnitt (5) und einen Schneidabschnitt (2) aufweist, wobei sich der Zwischenabschnitt (5) zwischen dem Verbindungsabschnitt (4) und dem Schneidabschnitt (2) erstreckt, wobei eine Längsmittelachse des Verbindungsabschnitts (4) eine Werkzeugdrehachse (R1) definiert, wobei sich der Zwischenabschnitt (5) entlang einer Längsmittelachse (A1) davon erstreckt, der Schneidabschnitt (2) eine obere Fläche (7) aufweist, wobei die obere Fläche (7) von dem Verbindungsabschnitt (4) abgewandt ist, der Schneidabschnitt (2) einen ersten Nasenabschnitt (10) aufweist, wobei der erste Nasenabschnitt (10) eine erste Schneidkante (11), eine zweite Schneidkante (12) und eine konvexe Nasenschneidkante (13) aufweist, die die erste und zweite Schneidkante (11, 12) verbindet;
- Bereitstellen eines Metallwerkstücks (31);
- Drehen des Metallwerkstücks (31) um eine Werkstück-Drehachse (R2);
- Einstellen der Werkzeugdrehachse (R1) senkrecht oder im Wesentlichen senkrecht zu der Werkstückdrehachse (R2);
- Ausführen eines ersten Durchgangs (36), so dass die erste Schneidkante (11) aktiv ist und die zweite Schneidkante (12) inaktiv ist,
- Ausführen eines zweiten Durchgangs (37), so dass die erste Schneidkante (11) inaktiv ist und die zweite Schneidkante (12) aktiv ist, wobei der zweite Durchgang (37) in einer längs oder radial entgegengesetzten oder im Wesentlichen entgegengesetzten Richtung zum ersten Durchgang (36) verläuft; und
- Drehen des Drehwerkzeugs (1) um die Werkzeugrotationsachse (R1) während des ersten Durchgangs (36) und/oder während des zweiten Durchgangs (37) und/oder nach dem ersten Durchgang (36), aber vor dem zweiten Durchgang (37).

2. Verfahren nach Anspruch 1, das ferner den Schritt aufweist, bei dem während des zweiten Durchgangs (37) wenigstens ein Teil einer bearbeiteten Oberfläche (38) des ersten Durchgangs (36) bearbeitet wird.

3. Verfahren nach einem der vorhergehenden Ansprüche, das ferner die folgenden Schritte aufweist:
Drehen des Schneidwerkzeugs (1) während des ersten Durchgangs in einer ersten Richtung um die Werkzeugdrehachse (R1), und
während des ersten zweiten Durchgangs, Drehen des Schneidwerkzeugs (1) in einer zweiten Richtung um die Werkzeugdrehachse (R1), wobei die zweite Richtung der ersten Richtung entgegengesetzt ist.

4. Verfahren nach einem der vorhergehenden Ansprüche, das ferner die folgenden Schritte aufweist:
Zurückziehen des Schneidwerkzeugs (1) von dem Metallwerkstück (31) nach dem ersten Durchgang (36),
und Drehen des Schneidwerkzeugs (1) um die Werkzeugrotationsachse (R1) vor dem zweiten Durchgang (37).

5. Verfahren nach einem der vorhergehenden Ansprüche, das die weiteren Schritte aufweist, bei denen der erste und der zweite Durchgang wiederholt werden, um nach und nach ein vorgegebenes Merkmal in das Metallwerkstück (31) zu schneiden.

6. Verfahren nach einem der vorhergehenden Ansprüche, mit den weiteren Schritten, bei denen die Drehachse (R1) des Werkzeugs so eingestellt wird, dass eine Tangente des Metallwerkstücks (31) an der Kontaktstelle mit der konvexen Nasenschneidkante (13) den Verbindungsabschnitt (4) schneidet oder im Wesentlichen schneidet.

7. Verfahren nach einem der vorhergehenden Ansprüche,
wobei der Schneidabschnitt (2) einen zweiten Nasenabschnitt (10') aufweist,
wobei der erste und der zweite Nasenabschnitt (10, 10') jeweils freie Enden des Schneidwerkzeugs (1) bilden,
wobei der erste und der zweite Nasenabschnitt (10, 10') in einer Draufsicht einen Winkel von mehr als 90° zueinander bilden, gemessen um die Längsmittelachse (A1) des Zwischenabschnitts (5).

8. Verfahren nach einem der vorhergehenden Ansprüche, wobei der Verbindungsabschnitt (4) und der Zwischenabschnitt (5) gemeinsam einen Werkzeugkörper (3) bilden,
wobei der Schneidabschnitt (2) die Form eines ersten Schneideinsatzes (2) aufweist,
wobei ein vorderes Ende (20) des Werkzeugkörpers (3) durch einen ersten Einsatzsitz (6) für den ersten Schneideinsatz (2) definiert ist,
wobei der erste Schneideinsatz (2) durch Einspannvorrichtungen (14) lösbar in dem ersten Einsatzsitz (6) eingespannt wird,
wobei der erste Schneideinsatz (2) eine untere Fläche (8) aufweist, die der oberen Fläche (7) gegenüberliegt, wobei eine seitliche Fläche (9) die obere und untere Fläche (7, 8) miteinander verbindet,
wobei sich eine Mittelebene (M1) in der Mitte zwischen der oberen und der unteren Fläche (8, 9) erstreckt,
wobei die Nasenschneide (13) in der Draufsicht konvex gekrümmt ist und einen Krümmungsradius von 0,15 - 1,3 mm aufweist.

9. Verfahren nach Anspruch 7 oder 8, mit den weiteren Schritten:
Zurückziehen des Schneidwerkzeugs (1) von dem Metallwerkstück (31),
und Drehen des Schneidwerkzeugs (1) um die Werkzeugdrehachse (R1), so dass der erste Nasenabschnitt (10) von dem Metallwerkstück (31) wegbewegt wird und der zweite Nasenabschnitt (10') zu dem Metallwerkstück (31) hinbewegt wird.

10. Verfahren nach einem der vorhergehenden Ansprüche, wobei die konvexe Nasenschneidkante (13) die Werkzeugdrehachse (R1) schneidet oder im Wesentlichen schneidet, wobei die Längsmittelachse (A1) parallel zu und beabstandet von der Werkzeugdrehachse (R1) ist.

11. Verfahren nach einem der Ansprüche 7-9,
wobei die ersten und zweiten Nasenabschnitte (10, 10') symmetrisch in Bezug auf die Längsmittelachse (A1) angeordnet sind,
wobei die Längsmittelachse (A1) kolinear mit der Werkzeugdrehachse (R1) ist,

12. Verfahren nach einem der Ansprüche 8 bis 11,
wobei das Schneidwerkzeug (1) einen zweiten Schneideinsatz (29) aufweist, der in einen zweiten Einsatzsitz eingespannt wird, wobei der zweite Einsatzsitz in dem Zwischenabschnitt (5) des Werkzeugkörpers (3) ausgebildet ist, wobei der zweite Einsatzsitz in Längsrichtung zwischen dem ersten Schneideinsatz (2) und dem Verbindungsabschnitt (4) angeordnet und von diesen beabstandet ist,
wobei das Verfahren die folgenden weiteren Schritte aufweist
Zurückziehen des Schneidwerkzeugs (1) aus dem Metallwerkstück (31),
Bewegen des Schneidwerkzeugs (1) in einer Vorwärtsrichtung entlang der Werkzeugrotationsachse (R1).

13. Verfahren nach einem der vorhergehenden Ansprüche,
das den weiteren Schritt aufweist, bei dem die maximale Spandicke während des ersten Durchgangs und/oder des zweiten Durchgangs als konstant oder im Wesentlichen konstant eingestellt wird.

14. Computerprogramm mit Befehlen, die, wenn sie von einer Drehmaschine mit rechnergestützter numerischer Steuerung ausgeführt werden, die Drehmaschine mit rechnergestützter numerischer Steuerung veranlassen, das Verfahren nach einem der Ansprüche 1 bis 13 auszuführen.

15. Computerlesbares Medium, das ein Computerprogramm nach Anspruch 14 darauf gespeichert aufweist.

16. Datenstrom, der repräsentativ für ein Computerprogramm nach Anspruch 14 ist.

## Revendications

1. Procédé de tournage pour un tour à commande numérique par ordinateur comprenant les étapes consistant à :
- fournir un outil de coupe (1) comprenant une partie d'accouplement (4), une partie intermédiaire (5) et une partie de coupe (2), la partie intermédiaire (5) s'étendant entre la partie d'accouplement (4) et la partie de coupe (2), un axe central longitudinal de la partie d'accouplement (4) définissant un axe de rotation d'outil (R1), la partie intermédiaire (5) s'étendant le long d'un axe central longitudinal (A1) de celle-ci, la partie de coupe (2) comprenant une surface supérieure (7), la surface supérieure (7) étant orientée vers l'opposé de la partie d'accouplement (4), la partie de coupe (2) comprenant une première partie de bec (10), la première partie de bec (10) comprenant une première arête de coupe (11), une seconde arête de coupe (12), et une arête de coupe de bec convexe (13) reliant les première et seconde arêtes de coupe (11, 12) ;
- fournir une pièce d'ouvrage métallique (31) ;
- entraîner en rotation la pièce d'ouvrage métallique (31) autour d'un axe de rotation de pièce d'ouvrage (R2) ;
- placer l'axe de rotation d'outil (R1) perpendiculairement ou sensiblement perpendiculairement à l'axe de rotation de pièce d'ouvrage (R2) ;
- réaliser une première passe (36) de telle sorte que la première arête de coupe (11) est active et de telle sorte que la seconde arête de coupe (12) est inactive,
- réaliser une seconde passe (37) de telle sorte que la première arête de coupe (11) est inactive et de telle sorte que la seconde arête de coupe (12) est active, où la seconde passe (37) est faite selon une direction longitudinalement ou radialement opposée ou sensiblement opposée à la première passe (36) ; et
- pivoter l'outil de tournage (1) autour de l'axe de rotation d'outil (R1) durant la première passe (36) et/ou durant la seconde passe (37) et/ou après la première passe (36) mais avant la seconde passe (37).

2. Procédé selon la revendication 1, comprenant en outre l'étape consistant à, durant la seconde passe (37), usiner au moins une partie d'une surface usinée (38) résultant de la première passe (36).

3. Procédé selon l'une quelconque des revendications précédentes, comprenant en outre les étapes consistant à :
durant la première passe, pivoter l'outil de coupe (1) selon un premier sens autour de l'axe de rotation d'outil (R1), et
durant la première seconde passe, pivoter l'outil de coupe (1) selon un second sens autour de l'axe de rotation d'outil (R1) où ledit second sens est opposé audit premier sens.

4. Procédé selon l'une quelconque des revendications précédentes, comprenant en outre les étapes consistant à :
retirer l'outil de coupe (1) de la pièce d'ouvrage métallique (31) après la première passe (36),
et pivoter l'outil de coupe (1) autour de l'axe de rotation d'outil (R1) avant la seconde passe (37).

5. Procédé selon l'une quelconque des revendications précédentes, comprenant les étapes supplémentaires consistant à répéter les première et seconde passes afin de découper progressivement une caractéristique prédéfinie dans la pièce d'ouvrage métallique (31).

6. Procédé selon l'une quelconque des revendications précédentes, comprenant les étapes supplémentaires consistant à placer l'axe de rotation d'outil (R1) de telle sorte qu'une tangente de la pièce d'ouvrage métallique (31) au point de contact avec l'arête de coupe de bec convexe (13) croise ou sensiblement croise la partie d'accouplement (4).

7. Procédé selon l'une quelconque des revendications précédentes,
où la partie de coupe (2) comprend une seconde partie de bec (10'),
où les première et seconde parties de bec (10, 10') forment chacune des extrémités libres de l'outil de coupe (1),
où selon une vue de dessus, les première et seconde parties de bec (10, 10') forment un angle de plus de 90° l'une par rapport à l'autre mesuré autour de l'axe central longitudinal (A1) de la partie intermédiaire (5).

8. Procédé selon l'une quelconque des revendications précédentes, où la partie d'accouplement (4) et la partie intermédiaire (5) forment ensemble un corps d'outil (3),
où la partie de coupe (2) se présente sous la forme d'une première plaquette de coupe (2),
où une extrémité avant (20) du corps d'outil (3) est définie par un premier siège de plaquette (6) destiné à la première plaquette de coupe (2),
où la première plaquette de coupe (2) est fixée de manière amovible dans le premier siège de plaquette (6) par un moyen de fixation (14),
où la première plaquette de coupe (2) comprend une surface inférieure (8) opposée à la surface supérieure (7), où une surface latérale (9) relie les surfaces supérieure et inférieure (7, 8),
où un plan médian (M1) s'étend à mi-distance entre les surfaces supérieure et inférieure (7, 8), où l'arête de coupe de bec (13) est selon une vue de dessus incurvée de manière convexe avec un rayon de courbure de 0,15 à 1,3 mm.

9. Procédé selon la revendication 7 ou 8, comprenant les étapes supplémentaires consistant à :
retirer l'outil de coupe (1) de la pièce d'ouvrage métallique (31),
et pivoter l'outil de coupe (1) autour de l'axe de rotation d'outil (R1) de telle sorte que la première partie de bec (10) est écartée de la pièce d'ouvrage métallique (31) et de telle sorte que la seconde partie de bec (10') est avancée vers la pièce d'ouvrage métallique (31).

10. Procédé selon l'une quelconque des revendications précédentes, où l'arête de coupe de bec convexe (13) croise ou sensiblement croise l'axe de rotation d'outil (R1), où l'axe central longitudinal (A1) est parallèle à et espacé de l'axe de rotation d'outil (R1).

11. Procédé selon l'une quelconque des revendications 7 à 9,
où les première et seconde parties de bec (10, 10') sont agencées de manière symétrique par rapport à l'axe central longitudinal (A1),
où l'axe central longitudinal (A1) est colinéaire à l'axe de rotation d'outil (R1).

12. Procédé selon l'une quelconque des revendications 8 à 11,
où l'outil de coupe (1) comprend une seconde plaquette de coupe (29) fixée dans un second siège de plaquette, où le second siège de plaquette est ménagé dans la partie intermédiaire (5) du corps d'outil (3), où le second siège de plaquette est positionné longitudinalement entre, et espacé de, la première plaquette de coupe (2) et la partie d'accouplement (4),
où le procédé comprend les étapes supplémentaires consistant à
retirer l'outil de coupe (1) de la pièce d'ouvrage métallique (31),
déplacer l'outil de coupe (1) selon une direction vers l'avant le long de l'axe de rotation d'outil (R1).

13. Procédé selon l'une quelconque des revendications précédentes,
comprenant l'étape supplémentaire consistant à régler l'épaisseur maximale de copeaux à une valeur constante ou sensiblement constante durant la première passe et/ou la seconde passe.

14. Programme informatique présentant des instructions lesquelles lorsqu'elles sont exécutées par un tour à commande numérique par ordinateur amènent le tour à commande numérique par ordinateur à réaliser le procédé selon l'une quelconque des revendications 1 à 13.

15. Support lisible par ordinateur ayant mémorisé sur celui-ci un programme informatique selon la revendication 14.

16. Flux de données, lequel est représentatif d'un programme informatique selon la revendication 14.
